# EUROPEAN PATENT APPLICATION

(11) **EP 4 775 847 A2**
(43) Date of publication of application: **15.07.2026**
(21) Application number: 26179831.8
(22) Date of filing: 20.11.2024
(51) Int. Cl.: F16F 7/08

(54) **LONG-MEMBER VIBRATION SUPPRESSION SYSTEM AND BOBBIN HOLDER**

(30) Priority: 15.12.2023 JP 2023211919; 15.12.2023 JP 2023211920
(62) Divisional of application: 24214224.8
(71) Applicant: TMT Machinery, Inc., Osaka-shi, Osaka 541-0041 (JP)
(72) Inventor: YASUKAWA, Riku, Kyoto-shi, Kyoto, 612-8686 (JP); INOUE, Takehisa, Kyoto-shi, Kyoto, 612-8686 (JP); HASHIMOTO, Kinzo, Kyoto-shi, Kyoto, 612-8686 (JP)
(74) Representative: Hoffmann Eitle

(57) **Abstract**

The invention relates to a long-member vibration suppression system comprising:
a long member (22) which is long in one direction and which is bent due to vibration; and
an attenuation member (130) which is pipe-shaped and which is used in an attached state of being attached to the long member (22) so as to extend in the one direction for suppressing vibration of the long member (22),
the attenuation member (130) including:
a fixed portion (132) which is positionally fixed to the long member (22) in the one direction while the attenuation member (130) is in the attached state; and
a contact portion (131) which is positionally different from the fixed portion (132) in the one direction, which is configured to make contact with and press an elongated surface (22b), and which is movable relative to the elongated surface (22b) in the one direction while the attenuation member (130) is in the attached state, the elongated surface (22b) being an outer side surface of the long member (22) and extending along the one direction,
at least one slit (35) being formed in the attenuation member (130), the at least one slit (35) extending in the one direction and being open at least at one end portion of the attenuation member (130) while the attenuation member (130) is in the attached state, the one end portion of the attenuation member (130) being provided on one side in the one direction,
the contact portion (131) of the attenuation member (130) in the attached state being formed in a region where the at least one slit (35) is formed in the one direction, and
the attenuation member (130) being fitted to the outer side surface of the long member (22) while the size of the contact portion (131) in an orthogonal direction orthogonal to the one direction is expanded by the at least one slit (35).

## Description

### BACKGROUND OF THE INVENTION

The present invention relates to a vibration suppression system configured to suppress the vibration of a long member.

JP 2018-72227 A discloses a yarn winding apparatus configured to wind a yarn onto a bobbin so as to form a package. Such a yarn winding apparatus includes a bobbin holder including: a bobbin holding member to which bobbins are attached; a rotational shaft attached to the bobbin holding member; and a shaft supporting member which rotatably supports the rotational shaft. The shaft supporting member is a long member which is long in one direction and in which the rotational shaft is located. Further, US 2016/0101961 A1 is related to a winding machine having a traversing plate with a tubular beam connected thereto and at least one damping element being provided between the ends of the tubular beam. US 2022/0403913 A1 is related to a vibration isolator for a compressor, and DE 10150297 A1 shows a winding machine with an attenuation member attached to a bobbin holding member.

### SUMMARY OF THE INVENTION

As described above, the vibration of the long member may be disadvantageous in machinery, etc. including the long member. For example, the shaft supporting member (long member) of the bobbin holder disclosed in JP 2018-72227 A may vibrate in accordance with the vibration of the rotational shaft (rotation member) supported by the shaft supporting member and that of the bobbin holding member. As such, as the shaft supporting member vibrates, a problem such as the reduction in life of a bearing, etc. occurs. This bearing is provided between the rotational shaft and the shaft supporting member.

An object of the present invention is to provide a vibration suppression system configured to suppress the vibration of a long member. This object is solved by the subject matter of claim 1. Preferred embodiments are described in the further claims.

According to a first aspect of the invention, a long-member vibration suppression system comprises: a long member which is long in one direction and which is bent due to vibration; and an attenuation member which is used in an attached state of being attached to the long member for suppressing vibration of the long member. This attenuation member includes: a fixed portion which is positionally fixed to the long member in the one direction while the attenuation member is in the attached state; a contact portion which is positionally different from the fixed portion in the one direction, which is configured to make contact with and press an elongated surface of the long member, and which is movable relative to the elongated surface in the one direction while the attenuation member is in the attached state, the elongated surface extending along the one direction; and a noncontact portion which is positioned between the contact portion and the fixed portion and which does not make contact with the elongated surface of the long member while the attenuation member is in the attached state.

According to this aspect, when the long member is bent due to vibration so as to be deformed in the one direction, the contact portion of the attenuation member moves relative to the elongated surface of the long member while pressing the elongated surface thereof. Because of this, a large friction force is generated between the elongated surface of the long member and the contact portion of the attenuation member, energy dissipates as frictional heat, and the vibration of the long member is suppressed.

When the long member is bent due to vibration so as to be deformed in the one direction, the fixed portion of the attenuation member moves together as the long member in the one direction. Because of this, the contact portion which is positionally different from the fixed portion in the one direction is reliably movable relative to the long member in the one direction. As a result, the vibration of the long member is reliably suppressed.

The distance between the contact portion and the fixed portion in the one direction is increased by the noncontact portion. Therefore, when the long member is bent due to vibration, the distance of relative movement between the contact portion and the long member is sufficiently long. This increases the energy (frictional heat) generated by friction caused by the relative movement of the contact portion to the elongated surface of the long member, and effectively suppresses the vibration of the long member.

According to a second aspect of the invention, the long-member vibration suppression system of the first aspect is arranged such that the long member is tube-shaped, the elongated surface is an inner side surface of the long member, and the attenuation member is inserted into and attached to the long member.

According to this aspect, as the contact portion of the attenuation member inserted into the long member moves relative to the inner side surface of the long member while pressing the inner side surface thereof, the vibration of the long member is suppressed.

According to a third aspect of the invention, the long-member vibration suppression system of the second aspect is arranged such that the attenuation member is pipe-shaped, and the attenuation member in the attached state extends in the one direction.

According to this aspect, the provision of the pipe-shaped attenuation member makes it possible to provide another member in the attenuation member. This improves the degree of freedom in designing.

According to a fourth aspect of the invention, the long-member vibration suppression system of the third aspect is arranged such that at least one slit is formed in the attenuation member, one end portion of the attenuation member is provided on one side in the one direction, the at least one slit extends in the one direction and is open at least at the one end portion of the attenuation member while the attenuation member is in the attached state, the contact portion of the attenuation member in the attached state is formed in a region where the at least one slit is formed in the one direction, and the attenuation member is inserted into the long member while the contact portion is compressed in size in the direction orthogonal to the one direction by the at least one slit.

According to this aspect, the attenuation member can press the inner side surface of the long member by means of restoring force of the contact portion.

According to a fifth aspect of the invention, the long-member vibration suppression system of the fourth aspect is arranged such that the long member is cylindrical in shape and hollow, and slits are formed at regular intervals in a circumferential direction of the long member.

According to this aspect, the attenuation member can press the inner side surface of the long member evenly in the circumferential direction by means of the contact portion. Therefore, even when the long member is bent in any radial direction of the long member, the vibration of the long member is suppressed.

According to a sixth aspect of the invention, the long-member vibration suppression system of the first aspect is arranged such that the elongated surface is an outer side surface of the long member, the attenuation member is pipe-shaped, and the attenuation member is fitted to the outer side surface of the long member and attached to the long member.

According to this aspect, as the contact portion of the attenuation member fitted to the outer side surface of the long member moves relative to the outer side surface of the long member while pressing the outer side surface thereof, the vibration of the long member is suppressed.

According to a seventh aspect of the invention, the long-member vibration suppression system of the sixth aspect is arranged such that at least one slit is formed in the attenuation member, one end portion of the attenuation member is provided on one side in the one direction, the at least one slit extends in the one direction and is open at least at the one end portion of the attenuation member while the attenuation member is in the attached state, the contact portion of the attenuation member in the attached state is formed in a region where the at least one slit is formed in the one direction, and the attenuation member is fitted to the outer side surface of the long member while the size of the contact portion in the direction orthogonal to the one direction is expanded by the at least one slit.

According to this aspect, the attenuation member can press the outer side surface of the long member by means of the restoring force of the contact portion.

According to an eighth aspect of the invention, the long-member vibration suppression system of the seventh aspect is arranged such that the outer side surface of the long member is cylindrical in shape, and slits are formed at regular intervals in a circumferential direction of the long member.

According to this aspect, the contact portion of the attenuation member can press the outer side surface of the long member evenly in the circumferential direction. Therefore, even when the long member is bent in any radial direction of the long member, the vibration of the long member is suppressed.

According to a ninth aspect of the invention, the long-member vibration suppression system of any one of the first to eighth aspects is arranged such that the long member includes: a first portion; and a second portion which is positionally different from the first portion in the one direction and whose cross-sectional area in a direction orthogonal to the one direction is smaller than the cross-sectional area of the first portion, and the attenuation member is located so that the second portion is positioned between the contact portion and the fixed portion in the one direction while the attenuation member is in the attached state.

According to this aspect, when the long member vibrates, the distortion of the second portion is increased as compared to the first portion. Therefore, the attenuation member is located so that the second portion of the long member is positioned between the fixed portion and the contact portion so as to further increase the distance of relative movement of the contact portion to the long member which is being bent due to vibration. This sufficiently increases the energy generated by friction caused by the relative movement of the contact portion to the elongated surface of the long member, and reliably suppresses the vibration of the long member.

According to a tenth aspect of the invention, the long-member vibration suppression system of any one of the first to ninth aspects is arranged such that one end portion of the attenuation member is provided on one side in the one direction, the contact portion is provided at the one end portion of the attenuation member on the one side in the one direction, the other end portion of the attenuation member is provided on the other side in the one direction, and the fixed portion is provided at the other end portion of the attenuation member on the other side in the one direction.

According to this aspect, the distance between the contact portion and the fixed portion in the one direction is sufficiently increased. With this arrangement, when the long member is bent due to vibration, (i) the energy generated by the friction caused by the relative movement of the contact portion to the elongated surface of the long member is further increased and (ii) the vibration of the long member is further reliably suppressed.

According to an eleventh aspect of the invention, a long-member vibration suppression system comprises: a tube-shaped long member which is long in one direction and which is bent due to vibration; and an attenuation member which is pipe-shaped and which is used in an attached state of being attached to the long member so as to extend in the one direction for suppressing vibration of the long member. This attenuation member includes: a fixed portion which is positionally fixed to the long member in the one direction while the attenuation member is in the attached state; and a contact portion which is positionally different from the fixed portion in the one direction, which is configured to make contact with and press an elongated surface, and which is movable relative to the elongated surface in the one direction while the attenuation member is in the attached state, the elongated surface being an inner side surface of the long member and extending along the one direction. In this regard, at least one slit is formed in the attenuation member, the at least one slit extends in the one direction and is open at least at one end portion of the attenuation member while the attenuation member is in the attached state, the one end portion of the attenuation member is provided on one side in the one direction, the contact portion of the attenuation member in the attached state is formed in a region where the at least one slit is formed in the one direction, and the attenuation member is inserted into the long member while the contact portion is compressed in size in an orthogonal direction orthogonal to the one direction by the at least one slit.

According to this aspect, when the long member is bent due to vibration so as to be deformed in the one direction, the contact portion of the attenuation member moves relative to the inner side surface of the long member while pressing the inner side surface thereof. Because of this, a large friction force is generated between the inner side surface of the long member and the contact portion of the attenuation member, energy dissipates as frictional heat, and the vibration of the long member is suppressed.

When the long member is bent due to vibration so as to be deformed in the one direction, the fixed portion of the attenuation member moves together as the long member in the one direction. Because of this, the contact portion which is positionally different from the fixed portion in the one direction is reliably movable relative to the long member in the one direction. As a result, the vibration of the long member is reliably suppressed.

The attenuation member can press the inner side surface of the long member by means of restoring force of the contact portion.

According to a twelfth aspect of the invention, the long-member vibration suppression system of the eleventh aspect is arranged such that the long member is cylindrical in shape and hollow, and slits are formed at regular intervals in a circumferential direction of the long member.

According to this aspect, the attenuation member can press the inner side surface of the long member evenly in the circumferential direction by means of the contact portion. Therefore, even when the long member is bent in any radial direction of the long member, the vibration of the long member is suppressed.

According to a thirteenth aspect of the invention, a long-member vibration suppression system comprises: a long member which is long in one direction and which is bent due to vibration; and an attenuation member which is pipe-shaped and which is used in an attached state of being attached to the long member so as to extend in the one direction for suppressing vibration of the long member. The attenuation member includes: a fixed portion which is positionally fixed to the long member in the one direction while the attenuation member is in the attached state; and a contact portion which is positionally different from the fixed portion in the one direction, which is configured to make contact with and press an elongated surface, and which is movable relative to the elongated surface in the one direction while the attenuation member is in the attached state, the elongated surface being an outer side surface of the long member and extending along the one direction. In this regard, at least one slit is formed in the attenuation member, the at least one slit extends in the one direction and is open at least at one end portion of the attenuation member while the attenuation member is in the attached state, the one end portion of the attenuation member is provided on one side in the one direction, the contact portion of the attenuation member in the attached state is formed in a region where the at least one slit is formed in the one direction, and the attenuation member is fitted to the outer side surface of the long member while the size of the contact portion in an orthogonal direction orthogonal to the one direction is expanded by the at least one slit.

According to this aspect, when the long member is bent due to vibration so as to be deformed in the one direction, the contact portion of the attenuation member moves relative to the outer side surface of the long member while pressing the outer side surface thereof. Because of this, a large friction force is generated between the outer side surface of the long member and the contact portion of the attenuation member, energy dissipates as frictional heat, and the vibration of the long member is suppressed.

When the long member is bent due to vibration so as to be deformed in the one direction, the fixed portion of the attenuation member moves together as the long member in the one direction. Because of this, the contact portion which is positionally different from the fixed portion in the one direction is reliably movable relative to the long member in the one direction. As a result, the vibration of the long member is reliably suppressed.

According to this aspect, the attenuation member can press the outer side surface of the long member by means of the restoring force of the contact portion.

According to a fourteenth aspect of the invention, the long-member vibration suppression system of the thirteenth aspect is arranged such that the outer side surface of the long member is cylindrical in shape, and slits are formed at regular intervals in a circumferential direction of the long member.

According to this aspect, the contact portion of the attenuation member can press the outer side surface of the long member evenly in the circumferential direction. Therefore, even when the long member is bent in any radial direction of the long member, the vibration of the long member is suppressed.

According to a fifteenth aspect of the invention, the long-member vibration suppression system of any one of tenth to fourteenth aspects further comprises a noncontact portion which is positioned between the contact portion and the fixed portion and which does not make contact with the elongated surface of the long member while the attenuation member is in the attached state.

The distance between the contact portion and the fixed portion in the one direction is increased by the noncontact portion. Therefore, when the long member is bent due to vibration, the distance of relative movement between the contact portion and the long member is sufficiently long. This increases the energy (frictional heat) generated by friction caused by the relative movement of the contact portion to the elongated surface of the long member, and effectively suppresses the vibration of the long member.

According to a sixteenth aspect of the invention, the long-member vibration suppression system of the fifteenth aspect is arranged such that the long member includes: a first portion; and a second portion which is positionally different from the first portion in the one direction and whose cross-sectional area in a direction orthogonal to the one direction is smaller than the cross-sectional area of the first portion, and the attenuation member is located so that the second portion is positioned between the contact portion and the fixed portion in the one direction while the attenuation member is in the attached state.

According to this aspect, when the long member vibrates, the distortion of the second portion is increased as compared to the first portion. Therefore, the attenuation member is located so that the second portion of the long member is positioned between the fixed portion and the contact portion so as to further increase the distance of relative movement of the contact portion to the long member which is being bent due to vibration. This sufficiently increases the energy generated by friction caused by the relative movement of the contact portion to the outer side surface of the long member, and reliably suppresses the vibration of the long member.

According to a seventeenth aspect of the invention, the long-member vibration suppression system of the fifteenth or sixteenth aspect is arranged such that one end portion of the attenuation member is provided on one side in the one direction, the contact portion is provided at the one end portion of the attenuation member on the one side in the one direction, the other end portion of the attenuation member is provided on the other side in the one direction, and the fixed portion is provided at the other end portion of the attenuation member on the other side in the one direction.

According to this aspect, the distance between the contact portion and the fixed portion in the one direction is sufficiently increased. With this arrangement, when the long member is bent due to vibration, (i) the energy generated by the friction caused by the relative movement of the contact portion to the elongated surface of the long member is further increased and (ii) the vibration of the long member is further reliably suppressed.

In any one of the first to seventeenth aspects of the invention, one part of the attenuation member may be made of a first material, another part of the attenuation member may be made of a second material whose abrasion resistance is higher than the abrasion resistance of the first material, and at least a contact surface of the contact portion with the elongated surface of the long member may be made of the second material. This suppresses the shortening of life of the contact portion due to friction.

In any one of the first to seventeenth aspects of the invention, the long member may be a member which is tube-shaped, into which a rotation member is inserted, and which rotatably supports the rotation member. This rotation member is rotatable about an axis extending along the one direction. This suppresses the vibration of the long member due to that of the rotation member.

According to an eighteenth aspect of the invention, a bobbin holder is cantilevered by a base, and the bobbin holder comprises: a rotational shaft extending along one direction; a bobbin holding member which is attached to the rotational shaft so as to be rotatable together as the rotational shaft and to which bobbins aligned in the one direction are attachable; and a shaft supporting member which is tube-shaped, which is long in the one direction, whose one of both end portions in the one direction is supported by the base, into which the rotational shaft is inserted, and which rotatably supports the rotational shaft via a bearing. In this regard, the long-member vibration suppression system according to any one of the first to seventeenth aspects is applied to the bobbin holder, and the bobbin holder is used while an attenuation member is attached to the shaft supporting member for suppressing vibration of the shaft supporting member.

In the cantilevered bobbin holder, the vibration of the shaft supporting member may be increased by the long bobbin holding member and the heavy bobbins. In the present invention, because the vibration of the shaft supporting member which is the long member is attenuated by the attenuation member, that of the shaft supporting member is suppressed.

### BRIEF DESCRIPTION OF THE DRAWINGS

FIG. 1 is a schematic diagram of a spun yarn take-up apparatus including a bobbin holder to which a vibration suppression system of the present invention is applied.
FIG. 2 is a cross section of the bobbin holder.
FIG. 3 is a perspective view of an attenuation member.
FIGs. 4(a) and 4(b) are enlarged views of a region surrounded by dashed lines in FIG. 2. FIG. 4(a) shows a shaft supporting member which is not deformed, and FIG. 4(b) shows the shaft supporting member subjected to bending deformation.
FIG. 5 is a perspective view of a testing machine provided for evaluating a vibration attenuation effect.
FIG. 6 is a graph showing (i) a vibration attenuation waveform in the case where the attenuation member is attached and (ii) a vibration attenuation waveform in the case where the attenuation member is not attached.
FIG. 7 is a graph showing (i) an attenuation rate of vibration in the case where the attenuation member is not attached and (ii) an attenuation rate of vibration in the case where the attenuation member is attached.
FIG. 8 is a cross section of the bobbin holder to which an attenuation member of one modification of the present embodiment is applied.
FIG. 9 is an enlarged view of a region surrounded by dashed lines in FIG. 8.

### DESCRIPTION OF THE PREFERRED EMBODIMENTS

The following will describe one preferred embodiment of a spun yarn take-up apparatus including a bobbin holder to which a vibration suppression system of the present invention is applied, with reference to figures.

### (Spun Yarn Take-Up Apparatus)

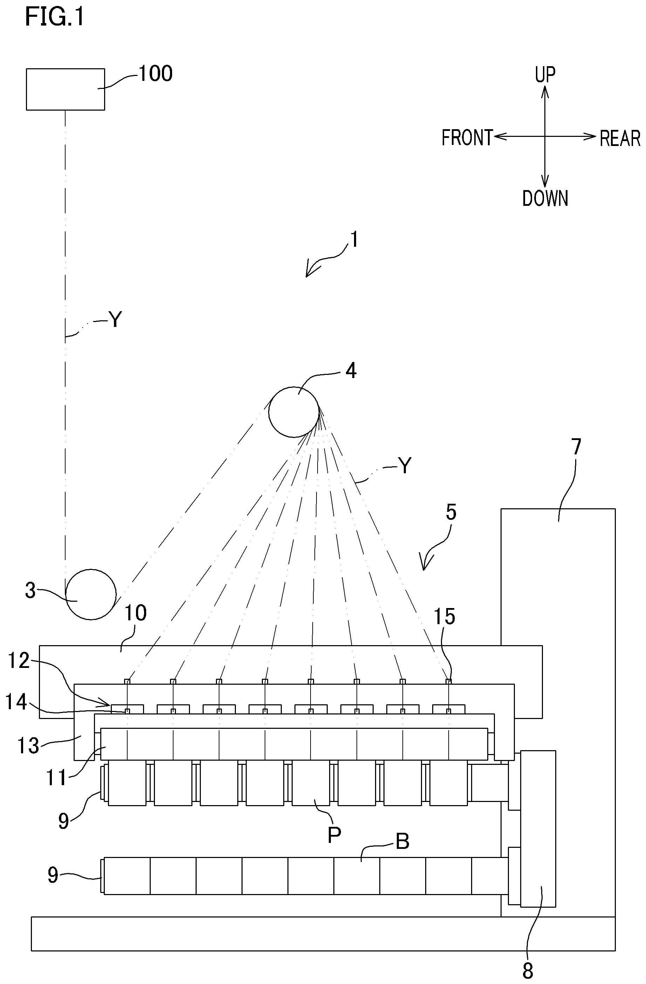

To begin with, the following will describe the overall structure of a spun yarn take-up apparatus 1 with reference to FIG. 1. Hereinafter, the left-right direction on the sheet of FIG. 1 is referred to as a front-rear direction, and the up-down direction on the sheet thereof is referred to as an up-down direction (a vertical direction) in which the gravity acts. The spun yarn take-up apparatus 1 is configured to wind synthetic fiber yarns Y spun out from a spinning apparatus 100 onto the respective bobbins B, so as to form packages P.

The spun yarn take-up apparatus 1 includes godet rollers 3 and 4, a yarn winding apparatus 5, etc. The spinning apparatus 100 is structured so that polymer supplied from a polymer supplier (not illustrated) formed of a gear pump, etc. is extruded downward through a spinneret (not illustrated). The yarns Y spun out from the spinning apparatus 100 are aligned in the vertical direction on the sheet of FIG. 1, and run along yarn paths passing the godet rollers 3 and 4 while being aligned at appropriate intervals by a yarn path guide (not illustrated). The yarns Y are then distributed in the front-rear direction from the godet roller 4, and wound onto the respective bobbins B at the yarn winding apparatus 5.

The yarn winding device 5 includes members such as a base 7, a turret 8, two bobbin holders 9, a supporting frame 10, a contact roller 11, a traverse unit 12, and the like. The yarn winding apparatus 5 is configured to rotate each bobbin holder 9 so that the yarns Y sent from the godet roller 4 are simultaneously wound onto the bobbins B and the packages P are formed.

The disc-shaped turret 8 is attached to the base 7. The turret 8 is rotated by a motor (not illustrated) about a rotational shaft which is in parallel to the front-rear direction. The two long bobbin holders 9 are cantilevered from the turret 8 so as to extend along the front-rear direction. The bobbins B aligned along the front-rear direction are attached to each bobbin holder 9. Each bobbin holder 9 is rotated by a later-described motor 25 about a rotational shaft which is in parallel to the front-rear direction.

As the turret 8 rotates, the positions of the two bobbin holders 9 are switched with each other, between an upper position and a lower position. The yarns Y are wound onto the bobbins B attached to one bobbin holder 9 located at the upper position. After the yarns Y are fully wound onto the bobbins B attached to the bobbin holder 9 at the upper position and thereby packages P are formed, the upper and lower positions of the two bobbin holders 9 are switched with each other. The yarns Y are then wound onto bobbins B attached to the other bobbin holder 9 having been moved to the upper position.

The supporting frame 10 is a frame-shaped member which is long and extends in the front-rear direction. The supporting frame 10 is fixed to the base 7. A roller supporting member 13 which is long in the front-rear direction is attached to a lower portion of the supporting frame 10 so as to be movable in the up-down direction with respect to the supporting frame 10. The roller supporting member 13 rotatably supports both ends of the contact roller 11 extending along an axial direction (front-rear direction) of each bobbin holder 9. The contact roller 11 is configured to make contact with the packages P supported by one bobbin holder 9 located at the upper position, during the winding of the yarns Y. With this arrangement, a predetermined contact pressure is applied to the packages P so that the shape of each package P is adjusted.

The traverse device 12 is attached to the roller supporting member 13 to be immediately above the contact roller 11. The traverse device 12 includes traverse guides 14 aligned in the front-rear direction. The traverse guides 14 are driven by a motor (not illustrated), and configured to reciprocate in the front-rear direction. The yarns Y are wound onto the respective traverse guides 14. As the traverse guides 14 reciprocate, the yarns Y are wound onto the respective bobbins B while being traversed about fulcrum guides 15 in the front-rear direction.

### (Bobbin Holder)

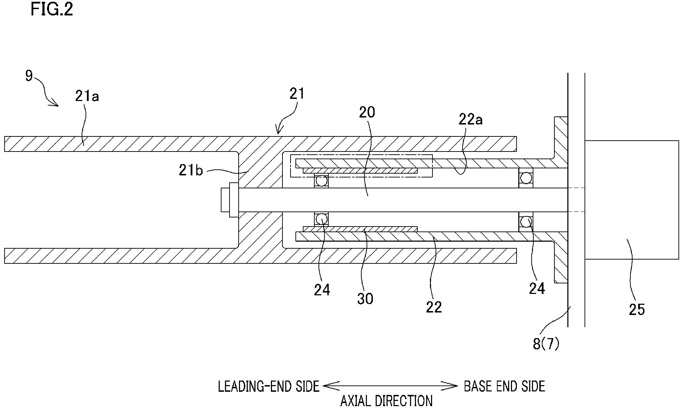

The following will detail the structure of each bobbin holder 9 with reference to FIG. 2. The left-right direction on the sheet of FIG. 2 is the axial direction (i.e., front-rear direction) of the bobbin holder 9. Hereinafter, the axial direction of the bobbin holder 9 is simply referred to as the "axial direction". As described above, the bobbin holder 9 is cantilevered by the base 7 via the turret 8. Hereinafter, the base 7 side (the right side on the sheet of FIG. 2) in the axial direction of the bobbin holder 9 is simply referred to as the base end side. The side (the left side on the sheet of FIG. 2) opposite to the base 7 side in the axial direction of the bobbin holder 9 is simply referred to as the leading end side. The bobbin holder 9 includes a rotational shaft 20, a bobbin holding member 21, a shaft supporting member 22, an attenuation member 30, etc.

The rotational shaft 20 extends along the axial direction. One end portion of the rotational shaft 20 is provided on the base end side, and connected to a drive shaft (not illustrated) of the motor 25. The motor 25 is incorporated in the turret 8. The rotational shaft 20 is configured to rotate about an axis extending along the axial direction, by means of driving of the motor 25.

The bobbin holding member 21 includes a shell part 21a which is cylindrical in shape and hollow and a boss part 21b. The shell part 21a is long in the axial direction. The bobbins B aligned in the axial direction are attachable to the outer circumferential surface of the shell part 21a. The boss part 21b is provided at a central portion of the shell part 21a in the axial direction. The internal space of the shell part 21a is partitioned by the boss part 21b into two spaces which are a leading end-side space and a base end-side space. In the internal space of the shell part 21a, the rotational shaft 20 is provided on the base end side as compared to the boss part 21b. The other end portion of the rotational shaft 20 is provided on the leading end side, and fixed to a central portion of the boss part 21b in a radial direction thereof. With this arrangement, the bobbin holding member 21 is attached to the rotational shaft 20 so as to be rotatable together as the rotational shaft 20.

The shaft supporting member 22 is a member which is cylindrical in shape, hollow, and long in the axial direction. An inner circumferential surface 22a of the shaft supporting member 22 extends along the axial direction. One end portion of the shaft supporting member 22 is provided on the base end side, and supported by the turret 8. The rotational shaft 20 is inserted into the shaft supporting member 22. The shaft supporting member 22 rotatably supports the rotational shaft 20, which is provided in the shaft supporting member 22, via bearings 24. The shaft supporting member 22 may vibrate in accordance with the vibration of the rotational shaft 20 supported by the shaft supporting member 22 and that of the bobbin holding member 21. That is, because the bobbin holder 9 of the present embodiment is cantilevered and unbalanced, the bobbin holding member 21 (rotational shaft 20) may vibrate. The rotational shaft 20 may vibrate because of exciting force applied to the bobbin holding member 21. This exciting force is generated because of the contact between the contact roller 11 and the packages P supported by the bobbin holder 9. Especially, when a rotational frequency of the bobbin holder 9 or a frequency of the exciting force applied from the outside is close to or overlaps with a natural frequency of the bobbin holder 9, severe vibration occurs. As such, as the rotational shaft 20 vibrates, the shaft supporting member 22 supporting the rotational shaft 20 vibrates.

The attenuation member 30 is a pipe-shaped member. The attenuation member 30 is attached to the shaft supporting member 22. While extending along the axial direction, the attenuation member 30 is inserted into the shaft supporting member 22. The attenuation member 30 is provided between the rotational shaft 20 and the shaft supporting member 22. The attenuation member 30 is provided for suppressing the vibration of the shaft supporting member 22 by attenuating that of the shaft supporting member 22.

### (Attenuation Member)

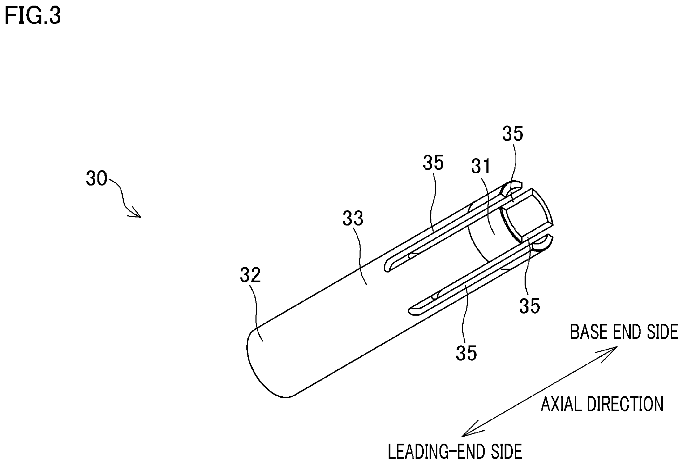

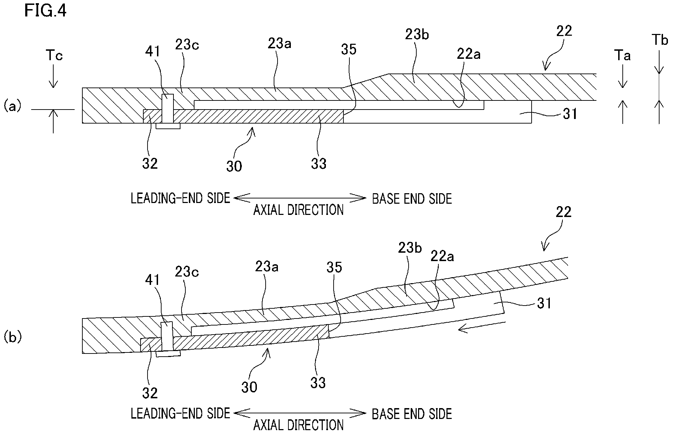

The following will detail the structure of the attenuation member 30 with reference to FIG. 3 and FIG. 4. The attenuation member 30 includes a contact portion 31, a fixed portion 32, and a noncontact portion 33. Slits 35 are formed in the attenuation member 30.

The slits 35 extend along the axial direction. The slits 35 extend from an actually central portion of the attenuation member 30 toward the base end side in the axial direction. The slits 35 are open at one end portion of the attenuation member 30 on the base end side. The slits 35 are provided at regular intervals in a circumferential direction of the shaft supporting member 22. In the present embodiment, the number of the slits 35 is four.

The contact portion 31 is provided at one end portion of the attenuation member 30 on the base end side in the axial direction. As shown in FIG. 4, the contact portion 31 is configured to make contact with the inner circumferential surface (inner side surface) 22a of the shaft supporting member 22. As described later, the contact portion 31 is configured to press the inner circumferential surface 22a of the shaft supporting member 22. The contact portion 31 is movable relative to the inner circumferential surface 22a of the shaft supporting member 22 in the axial direction. The contact portion 31 is formed in a region where the slits 35 are formed, in the axial direction.

The attenuation member 30 is structured so that the outer diameter of the contact portion 31 which is not inserted into the shaft supporting member 22 is larger than the inner diameter of a part of the shaft supporting member 22. In this regard, the contact portion 31 of the attenuation member 30 is inserted into this part of the shaft supporting member 22. The attenuation member 30 is inserted into the shaft supporting member 22 while the contact portion 31 is compressed in size in a direction (an orthogonal direction) orthogonal to the axial direction by the slits 35. The contact portion 31 then presses the inner circumferential surface 22a of the shaft supporting member 22 by means of restoring force.

The contact portion 31 is made of a material different from a material of the remaining part of the attenuation member 30. The abrasion resistance of the material of the contact portion 31 is higher than that of the material of the remaining part of the attenuation member 30. The material of the contact portion 31 is, e.g., polymer such as nylon and Teflon (Registered Trademark) or dissimilar metal such as brass and aluminum. The material of the remaining part of the attenuation member 30 is iron, brass, or the like.

The fixed portion 32 is positionally different from the contact portion 31 in the axial direction. The fixed portion 32 is provided at the other end portion of the attenuation member 30 on the leading end side in the axial direction. The fixed portion 32 is positionally fixed to the shaft supporting member 22 in the axial direction. In the present embodiment, the fixed portion 32 is fixed to the shaft supporting member 22 by a bolt 41. The way of fixing the fixed portion 32 to the shaft supporting member 22 is not limited to this. For example, the fixed portion 32 may be engaged with and fixed to the shaft supporting member 22, or may be mechanically fixed thereto by a mechanical lock.

The noncontact portion 33 is provided between the contact portion 31 and the fixed portion 32 in the axial direction. The outer diameter of the noncontact portion 33 is smaller than that of the contact portion 31. Therefore, as shown in FIG. 4, the noncontact portion 33 does not make contact with the inner circumferential surface 22a of the shaft supporting member 22.

As shown in FIG. 4, a side wall portion of the shaft supporting member 22 has a thin potion 23a. An adjacent portion 23b is provided on one side (the base end side) of the thin portion 23a in the axial direction of the shaft supporting member 22, and the thickness of the adjacent portion 23b is referred to as Tb. An adjacent portion 23c is provided on the other side (the leading end side) of the thin portion 23a in the axial direction of the shaft supporting member 22, and the thickness of the adjacent portion 23c is referred to as Tc. The thickness Ta of the thin portion 23a is smaller than the thickness Tb of the adjacent portion 23b and the thickness Tc of the adjacent portion 23c. That is, the thin portion 23a is thinner than the adjacent portion 23b and the adjacent portion 23c. In the area of a cross section of the shaft supporting member 22 in a direction orthogonal to the axial direction, the area of the thin portion 23a is smaller than the area of the adjacent portion 23b and the area of the adjacent portion 23c. The adjacent portions 23b and 23c are equivalent to a first portion of the present invention, and the thin portion 23a is equivalent to a second portion of the present invention. The attenuation member 30 is located so that the thin portion 23a is positioned between the contact portion 31 and the fixed portion 32 in the axial direction.

As the rotational shaft 20 vibrates, the shaft supporting member 22 vibrates so as to cause bending deformation (i.e., to be bent and deformed) as shown in FIG. 4(b). Because of this, the position of the shaft supporting member 22 changes in the axial direction. At this time, the fixed portion 32 of the attenuation member 30 moves together as the shaft supporting member 22 in the axial direction. Meanwhile, while pressing the inner circumferential surface 22a of the shaft supporting member 22, the contact portion 31 of the attenuation member 30 moves relative to the inner circumferential surface 22a of the shaft supporting member 22 in the axial direction. To be more specific, as indicated by an arrow in FIG. 4(b), the contact portion 31 moves relative to the inner circumferential surface 22a of the shaft supporting member 22 toward the leading end side in the axial direction. Because of this, a large friction force is generated between the inner circumferential surface 22a of the shaft supporting member 22 and the contact portion 31 of the attenuation member 30. As a result, energy dissipates as frictional heat, and the vibration of the shaft supporting member 22 is suppressed.

### (Evaluation of Vibration Attenuation Effect)

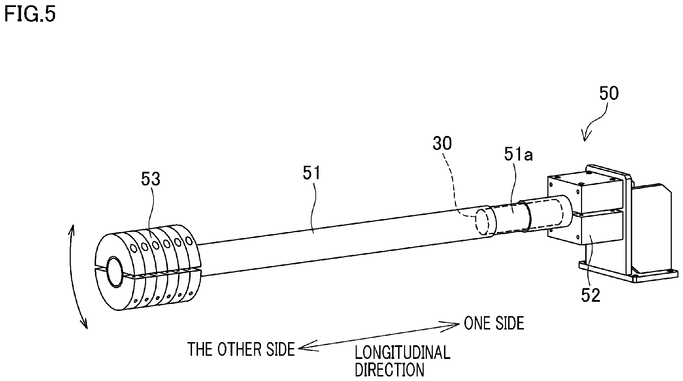

The vibration attenuation effect of the above-described attenuation member 30 was evaluated by using a testing machine of FIG. 5. As shown in FIG. 5, a testing machine 50 includes a long member 51 which is long in one direction. One end portion of the long member 51 is provided on one side in its longitudinal direction, and is cantilevered by a supporting member 52. The long member 51 is supported by the supporting member 52 so that its longitudinal direction is a substantially horizontal direction. The other end portion of the long member 51 is provided on the side opposite to one side in the longitudinal direction of the long member 51 (i.e., opposite to the side on which the long member 51 is supported by the supporting member 52), and mass 53 is attached to the other end portion of the long member 51. The long member 51 is tube-shaped. A side wall portion of the long member 51 has a thin portion 51a which is thinner than the remaining part of the long member 51 in the longitudinal direction thereof.

The following test was conducted in the testing machine 50: a test in which the long member 51 was caused to vibrate so that the long member 51 was subjected to the bending deformation. In this test, the magnitude of acceleration of vibration of the long member 51 was measured after was applying external force to the long member 51 so that the long member 51 vibrated.

In Case 1, the test was conducted after the attenuation member 30 of the embodiment above was inserted into the long member 51 as shown in FIG. 5. In this regard, the contact portion 31 of the attenuation member 30 makes contact with and presses an inner circumferential surface of the long member 51 and, in the longitudinal direction, moves relative to the inner circumferential surface of the long member 51. Furthermore, the fixed portion 32 of the attenuation member 30 is positionally fixed to the long member 51 in the longitudinal direction. The attenuation member 30 is located so that the thin portion 51a is positioned between the contact portion 31 and the fixed portion 32 in the longitudinal direction. In Case 2, the test was conducted without insertion of the attenuation member 30 into the long member 51.

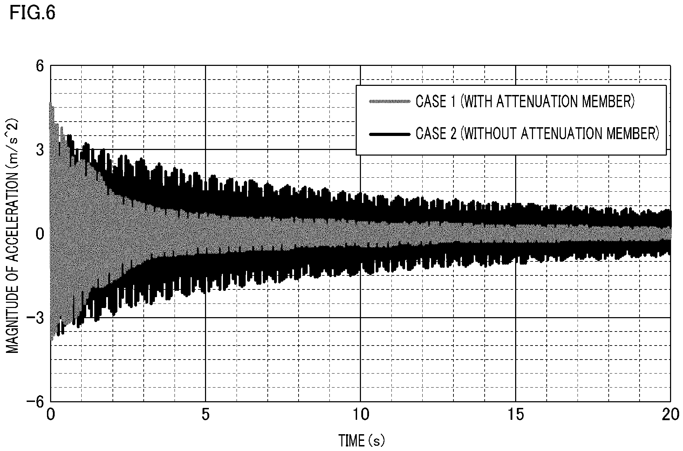

A graph of FIG. 6 shows vibration attenuation waveforms which were obtained in the above-described tests of Cases 1 and 2. The graph of FIG. 6 shows that the vibration of the long member 51 is swiftly attenuated in Case 1 with the attenuation member 30 as compared to Case 2 without the attenuation member 30.

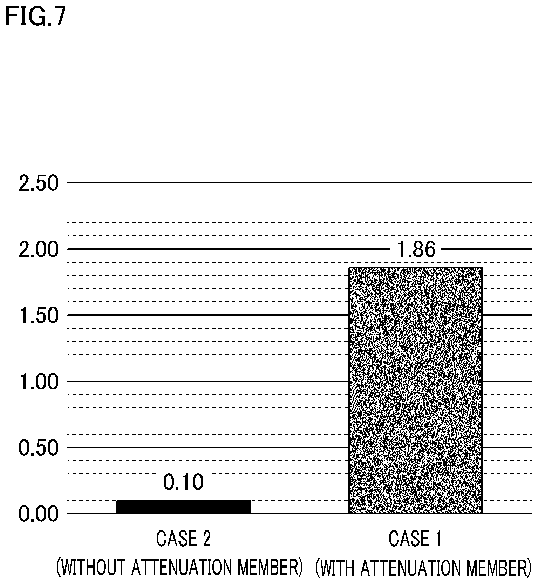

A graph of FIG. 7 shows attenuation rates of vibration in the above-described tests of Cases 1 and 2. As shown in the graph of FIG. 7, the attenuation rate of Case 1 with the attenuation member 30 is 1.86, and the attenuation rate of Case 2 without the attenuation member 30 is 0.10. These test results show that the attenuation member 30 has a sufficient vibration attenuation effect.

### (Characteristics of Embodiment)

As described above, a long-member vibration suppression system of the present embodiment includes: the shaft supporting member 22 which is long in the axial direction (one direction) and which is bent due to vibration; and the attenuation member 30 which is used for suppressing the vibration of the shaft supporting member 22 while being attached to the shaft supporting member 22. The attenuation member 30 includes the contact portion 31 which is able to make contact with and press an elongated surface (the inner circumferential surface 22a) of the shaft supporting member 22 and to move relative to the elongated surface in the axial direction while being attached to the shaft supporting member 22. This elongated surface extends in the axial direction.

With the above-described arrangement, when (i) the shaft supporting member 22 vibrates so as to cause the bending deformation and (ii) the position of the shaft supporting member 22 changes in the axial direction, the contact portion 31 of the attenuation member 30 moves relative to the inner circumferential surface 22a of the shaft supporting member 22 while pressing the inner circumferential surface 22a of the shaft supporting member 22. Because of this, a large friction force is generated between the inner circumferential surface 22a of the shaft supporting member 22 and the contact portion 31 of the attenuation member 30, energy dissipates as frictional heat, and the vibration of the shaft supporting member 22 is suppressed.

In the long-member vibration suppression system of the present embodiment, the shaft supporting member 22 is tube-shaped, the elongated surface of the shaft supporting member 22 extends along the axial direction and is the circumferential surface 22a, and the attenuation member 30 is inserted into and attached to the shaft supporting member 22. With this arrangement, as the contact portion 31 of the attenuation member 30 inserted into the shaft supporting member 22 moves relative to the inner circumferential surface 22a of the shaft supporting member 22 while pressing the inner circumferential surface 22a of the shaft supporting member 22, the vibration of the shaft supporting member 22 is suppressed.

The attenuation member 30 of the present embodiment is pipe-shaped, and extends in the axial direction while being attached to the shaft supporting member 22. With this arrangement, the provision of the pipe-shaped attenuation member 30 makes it possible to provide another member in the attenuation member 30. This improves the degree of freedom in designing.

While being attached to the shaft supporting member 22, the attenuation member 30 is provided with the slits 35 which extend in the axial direction and which are open at one end portion of the attenuation member 30 on the base end side in the axial direction. While being attached to the shaft supporting member 22, the contact portion 31 is formed in a region where the slits 35 are formed in the axial direction. The attenuation member 30 is inserted into the shaft supporting member 22 while the contact portion 31 is compressed in size in the direction orthogonal to the axial direction by the slits 35. With this arrangement, the inner circumferential surface 22a of the shaft supporting member 22 is pressed by the restoring force of the contact portion 31.

In the long-member vibration suppression system of the present embodiment, the shaft supporting member 22 is cylindrical in shape and hollow. The slits 35 of the attenuation member 30 are provided at regular intervals in the circumferential direction of the shaft supporting member 22. With this arrangement, the contact portion 31 can press the inner circumferential surface 22a of the shaft supporting member 22 evenly in the circumferential direction thereof. Therefore, even when the shaft supporting member 22 is subjected to the bending deformation in any radial direction of the long member, the vibration of the shaft supporting member 22 is suppressed.

The attenuation member 30 of the present embodiment includes: the fixed portion 32 which is positionally fixed to the shaft supporting member 22 in the axial direction while being attached to the shaft supporting member 22. The contact portion 31 is positionally different from the fixed portion 32 in the axial direction. With this arrangement, when (i) the shaft supporting member 22 is subjected to the bending deformation due to vibration and (ii) the position of the shaft supporting member 22 changes in the axial direction, the fixed portion 32 moves together as the position of the shaft supporting member 22 in the axial direction. Therefore, the contact portion 31 which is provided at a position different from the fixed portion 32 in the axial direction reliably moves relative to the shaft supporting member 22 in the axial direction. As a result, the vibration of the shaft supporting member 22 is reliably suppressed.

The attenuation member 30 of the present embodiment includes: the noncontact portion 33 which is provided between the contact portion 31 and the fixed portion 32 and which does not make contact with the inner circumferential surface 22a of the shaft supporting member 22 while the attenuation member 30 is attached to the shaft supporting member 22. With this arrangement, the distance between the contact portion 31 and the fixed portion 32 in the axial direction is increased by the noncontact portion 33. Therefore, when the shaft supporting member 22 is subjected to the bending deformation due to vibration, the distance of relative movement between the contact portion 31 and the shaft supporting member 22 is sufficiently long. This increases energy (frictional heat) generated by friction caused by the relative movement of the contact portion 31 to the inner circumferential surface 22a of the shaft supporting member 22, and effectively suppresses the vibration of the shaft supporting member 22.

In the long-member vibration suppression system of the present embodiment, the side wall portion of the shaft supporting member 22 has the adjacent portions 23b and 23c and the thin portion 23a. The thin portion 23a is provided at a position different from the adjacent portions 23b and 23c in the axial direction, and the cross-sectional area of the thin part 23a in a direction orthogonal to the axial direction is smaller than that of each of the adjacent portions 23b and 23c. The attenuation member 30 attached to the shaft supporting member 22 is located so that the thin portion 23a is positioned between the contact portion 31 and the fixed portion 32 in the axial direction. With this arrangement, when the shaft supporting member 22 vibrates, the distortion of the thin portion 23a is increased as compared to the adjacent portions 23b and 23c. Therefore, when (i) the attenuation member 30 is provided so that the thin portion 23a of the shaft supporting member 22 is provided between the contact portion 31 and the fixed portion 32 and (ii) the shaft supporting member 22 is subjected to the bending deformation due to vibration, the distance of relative movement between the contact portion 31 and the shaft supporting member 22 is further increased. As a result, the energy generated by friction caused by the relative movement of the contact portion 31 to the inner side surface 22a of the shaft supporting member 22 is sufficiently increased, and the vibration of the shaft supporting member 22 is reliably suppressed.

In the attenuation member 30 of the present embodiment, the contact portion 31 is provided at one end portion of the attenuation member 30 on the base end side in the axial direction, and the fixed portion 32 is provided at the other end portion thereof on the leading end side in the axial direction. With this arrangement, the distance between the contact portion 31 and the fixed portion 32 in the axial direction is sufficiently increased. As a result, when the shaft supporting member 22 is subjected to the bending deformation due to vibration, (i) the energy generated by friction caused by the relative movement of the contact portion 31 to the inner circumferential surface 22a of the shaft supporting member 22 is further increased and (ii) the vibration of the shaft supporting member 22 is further reliably suppressed.

In the attenuation member 30 of the present embodiment, the contact portion 31 of the attenuation member 30 is made of a material with a higher abrasion resistance than a material of the remaining part of the attenuation member 30. This suppresses the reduction in life of the contact portion 31 due to friction.

In the long-member vibration suppression system of the present embodiment, the rotational shaft 20 which is rotatable about an axis extending along the axial direction is inserted into the shaft supporting member 22 which rotatably supports the rotational shaft 20. With this arrangement, the vibration of the shaft supporting member 22 due to that of the rotational shaft 20 is suppressed by the attenuation member 30. As such, the reduction in life of the bearings 24 provided between the rotational shaft 20 and the shaft supporting member 22 is avoided by suppressing the vibration of the shaft supporting member 22.

The bobbin holder 9 of the present embodiment is cantilevered by the base 7, and includes: the rotational shaft 20 extending along the axial direction; the bobbin holding member 21 which is attached to the rotational shaft 20 so as to be rotatable together as the rotational shaft 20 and to which the bobbins B aligned in the axial direction are attachable; and the shaft supporting member 22 which is tube-shaped, which is long in the axial direction, whose one of both end portions in the axial direction is supported by the base 7, into which the rotational shaft 20 is inserted, and which rotatably supports the rotational shaft 20 via the bearings 24. Furthermore, the above-described long-member vibration suppression system is applied to the bobbin holder 9, and the bobbin holder 9 is used while the attenuation member 30 is attached to the shaft supporting member 22 for suppressing the vibration of the shaft supporting member 22.

In the cantilevered bobbin holder 9, the vibration of the shaft supporting member 22 may be increased by the long bobbin holding member 21 and the heavy bobbins B. With the above-described arrangement, because the vibration of the shaft supporting member 22 is attenuated by the attenuation member 30, that of the shaft supporting member 22 is suppressed. As such, the reduction in life of the bearings 24 provided between the rotational shaft 20 and the shaft supporting member 22 is avoided by suppressing the vibration of the shaft supporting member 22. Furthermore, the vibration of the entire bobbin holder 9 due to the exciting force, etc. applied from the outside is suppressed by suppressing that of the shaft supporting member 22 with use of the attenuation member 30. It is therefore possible to suppress the deterioration in quality of the yarns Y wound in the bobbin holder 9.

The embodiment of the present invention is described hereinabove. However, the specific structure of the present invention shall not be interpreted as to be limited to the above described embodiment. The scope of the present invention is defined not by the above embodiment but by claims set forth below, and shall encompass the equivalents in the meaning of the claims and every modification within the scope of the claims.

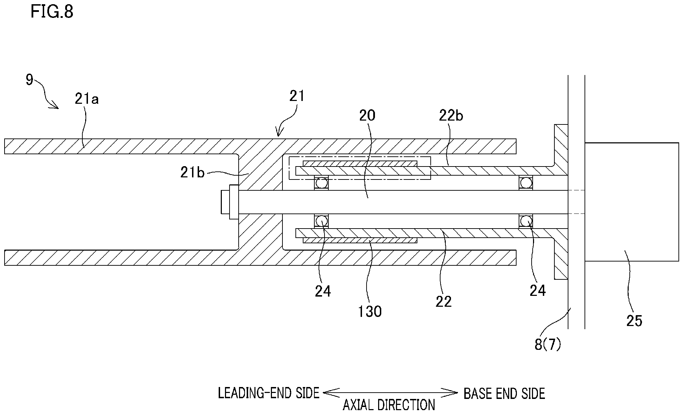

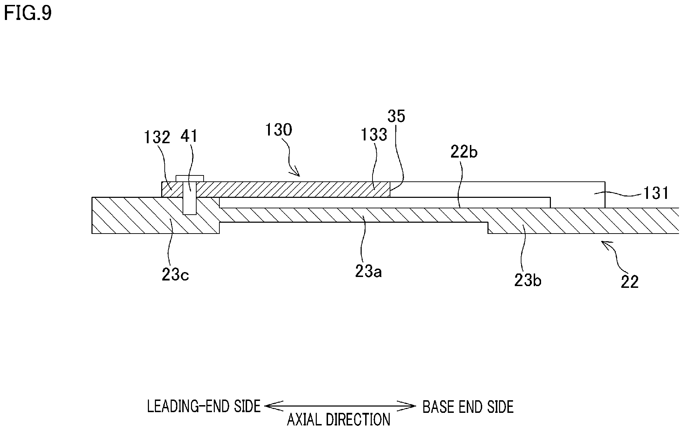

The embodiment above describes the attenuation member 30 which is used while being inserted into the shaft supporting member 22. However, the disclosure is not limited to this. An attenuation member 130 of one modification of the present embodiment is shown in FIG. 8 and FIG. 9, and this attenuation member 130 is used while being fitted to an outer side surface of the shaft supporting member 22. The shaft supporting member 22 of this modification is cylindrical in shape and hollow in the same manner as the embodiment above. That is, the outer side surface (an outer circumferential surface 22b) of the shaft supporting member 22 extends along the axial direction. The outer side surface of the shaft supporting member 22 is cylindrical in shape. The following will mainly describe the difference between the structure of the attenuation member 130 and that of the attenuation member 30.

A contact portion 131 of the attenuation member 130 is configured to make contact with the outer circumferential surface 22b of the shaft supporting member 22 while pressing the outer circumferential surface 22b thereof. The contact portion 131 is movable relative to the outer circumferential surface 22b of the shaft supporting member 22 in the axial direction. A fixed portion 132 of the attenuation member 130 is positionally fixed to the shaft supporting member 22 in the axial direction in the same manner as the fixed portion 32 of the attenuation member 30. A noncontact portion 133 of the attenuation member 130 does not make contact with the outer circumferential surface 22b of the shaft supporting member 22. The attenuation member 130 is located in the same manner as the attenuation member 30 so that the thin portion 23a of the shaft supporting member 22 is positioned between the contact portion 131 and the fixed portion 132 in the axial direction.

The contact portion 131 is formed in a region where the slits 35 are formed, in the axial direction. The attenuation member 130 is fitted to the outer side surface of the shaft supporting member 22 while the size of the contact portion 131 in the direction orthogonal to the axial direction is expanded by the slits 35. With this arrangement, the contact portion 131 presses the outer circumferential surface 22b of the shaft supporting member 22 by means of the restoring force.

In a long-member vibration suppression system of this modification, when the shaft supporting member 22 is subjected to the bending deformation due to vibration, a large friction force is generated between the outer circumferential surface 22b of the shaft supporting member 22 and the contact portion 131 in the same manner as the vibration suppression system of the embodiment above. As a result, energy dissipates as frictional heat, and the vibration of the shaft supporting member 22 is suppressed.

In each of the embodiment and modification above, the attenuation member 30, 130 is applied to the shaft supporting member 22. However, the disclosure is not limited to this. The attenuation member of the present invention is applicable to typical long members which are long in one direction and which are subjected to the bending deformation due to vibration. Each long member is not limited to a member which rotatably supports the rotational shaft 20 of the bobbin holder 9. The long member may be a member which rotatably supports a rotation member such as a machine and an apparatus which are not the bobbin holder 9. The long member may not rotatably support the rotation member. In the embodiment above, the attenuation member 30 is inserted into the shaft supporting member 22 which is cylindrical in shape and hollow and then used. However, the attenuation member 30 may be inserted into a long member which is polygonal tube-shaped and whose cross section is polygonal. In the modification above, the attenuation member 130 is fitted to the outer side surface of the shaft supporting member 22 which is cylindrical in shape and hollow and then used. However, the attenuation member 130 may be fitted to an outer side surface of a long member which is cylindrical in shape and solid or that of a long member which is polygonal tube-shaped or prism-shaped and whose cross section is polygonal in shape.

In the embodiment above, the attenuation member 30 is pipe-shaped. However, the disclosure is not limited to this. The attenuation member 30 may be columnar in shape, etc. and a space may not be formed therein.

In the embodiment above, the slits 35 extend in the axial direction. However, the disclosure is not limited to this. A direction in which the slits 35 extend may not be in parallel to the axial direction, and may be tilted from the axial direction.

In the embodiment above, the slits 35 are open at one end portion of the attenuation member 30 on the base end side in the axial direction. However, the disclosure is not limited to this. The slits 35 may be open at the other end portion of the attenuation member 30 on the leading end side in the axial direction.

In the embodiment above, the number of the slits 35 is four. However, the disclosure is not limited to this. The number of the slits 35 provided at the attenuation member 30 may be three or less or five or more. The number of the slits 35 may be one. When the number of the slits 35 is one, the slit 35 may be provided along the entire length of the attenuation member 30 in the axial direction. In this case, the slit 35 is open at both end portions of the attenuation member 30 in the axial direction.

In the embodiment above, the slits 35 are provided at regular intervals in the circumferential direction of the shaft supporting member 22. However, the disclosure is not limited to this. The slits 35 may be provided at irregular intervals in the circumferential direction of the shaft supporting member 22.

In the embodiment above, the contact portion 31 is compressed in size by the slits 35, and the contact portion 31 presses the inner circumferential surface 22a of the shaft supporting member 22 by means of the restoring force. In the modification above, the size of the contact portion 131 is expanded by the slits 35, and the contact portion 131 presses the outer circumferential surface 22b of the shaft supporting member 22 by means of the restoring force. However, a mechanism in which the contact portion 31, 131 presses the shaft supporting member 22 is not limited to this. For example, the contact portion 31, 131 may be made of an elastic material such as rubber and resin and the contact portion 31, 131 may press the shaft supporting member 22 by means of elastic force of a material of the contact portion 31, 131.

In each of the embodiment and modification above, the contact portion 31, 131 is provided at one end portion of the attenuation member 30 on the base end side in the axial direction, the fixed portion 32, 132 is provided at the other end portion thereof on the leading end side in the axial direction, and the noncontact portion 33, 133 is positioned between the contact portion 31, 131 and the fixed portion 32, 132. However, the disclosure is not limited to this. The contact portion 31, 131 may be provided at the other end portion of the attenuation member 30 on the leading end side in the axial direction while the fixed portion 32, 132 is provided at one end portion of the attenuation member 30 on the base end side in the axial direction. The contact portion 31, 131 and the fixed portion 32, 132 may not be provided at the end portions of the attenuation member 30 in the axial direction as long as those are positionally different in the axial direction. That is, only one of (i) the contact portion 31, 131 and (ii) the fixed portion 32, 132 may be provided at one of the end portions of the attenuation member 30 in the axial direction. Alternatively, both of (i) the contact portion 31, 131 and (ii) the fixed portion 32, 132 may not be provided at the end portions thereof in the axial direction. The contact portion 31, 131 may be adjacent to the fixed portion 32, 132 in the axial direction. In this case, the noncontact portion 33, 133 may not be provided.

In the embodiment above, the thin portion 23a which is thinner than the adjacent portion 23b and the adjacent portion 23c is provided at the side wall portion of the shaft supporting member 22. However, the disclosure is not limited to this. The thin portion 23a may be differently arranged as long as it is thinner than the thickest part of the side wall portion of the shaft supporting member 22. Preferably, the thin portion 23a is the thinnest part of the shaft supporting member 22.

In each of the embodiment and modification above, the attenuation member 30, 130 is located so that the thin portion 23a is positioned between the contact portion 31, 131 and the fixed portion 32, 132 in the axial direction. However, the disclosure is not limited to this. That is, the thin portion 23a may not be provided at the shaft supporting member 22. The thin portion 23a may not be positioned between the contact portion 31, 131 and the fixed portion 32, 132 in the axial direction.

In each of the embodiment and modification above, the abrasion resistance of a material of the contact portion 31, 131 is higher than that of a material of the remaining part of the attenuation member 30, 130. However, the disclosure is not limited to this. The abrasion resistance of at least a contact surface of the contact portion 31, 131 with the shaft supporting member 22 is preferably higher than that of the remaining part of the attenuation member 30, 130. For example, the attenuation member 30, 130 may be made of iron or brass and the contact surface of the contact portion 31, 131 with the shaft supporting member 22 may be provided with an abrasion-resistant layer whose abrasion resistance is higher than that of iron and brass. The abrasion-resistant layer is, e.g., a hard chrome-plated layer, a layer coated by ceramic deposition, a layer hardened by thermal treatment, or the like. When the attenuation member 30, 130 is formed of materials of three or more types, at least the contact surface of the contact portion 31, 131 with the shaft supporting member 22 may be differently arranged as long as it is not made of a material whose abrasion resistance is lowest among the materials of three or more types. The attenuation member 30, 130 may be made of a material of only one type.
The following numbered paragraphs describe further embodiments of the invention.
1. A long-member vibration suppression system comprising:
   a long member (22) which is long in one direction and which is bent due to vibration; and
   an attenuation member (30, 130) (30, 130) which is used in an attached state of being attached to the long member (22) for suppressing vibration of the long member (22), and
   the attenuation member (30, 130) including:
      a fixed portion (32, 132) which is positionally fixed to the long member (22) in the one direction while the attenuation member (30, 130) is in the attached state;
      a contact portion (31, 131) which is positionally different from the fixed portion (32, 132) in the one direction, which is configured to make contact with and press an elongated surface (22a, 22b) of the long member (22), and which is movable relative to the elongated surface (22a, 22b) in the one direction while the attenuation member (30, 130) is in the attached state, the elongated surface (22a, 22b) extending along the one direction; and
      a noncontact portion (31, 131) which is positioned between the contact portion (31, 131) and the fixed portion (32, 132) and which does not make contact with the elongated surface (22a, 22b) of the long member (22) while the attenuation member (30, 130) is in the attached state.
2. The long-member vibration suppression system according to any one of 1, wherein, the long member (22) is tube-shaped,
   the elongated surface (22a) is an inner side surface of the long member (22), and
   the attenuation member (30) is inserted into and attached to the long member (22).
3. The long-member vibration suppression system according to 2, wherein, the attenuation member (30) is pipe-shaped, and the attenuation member in the attached state extends in the one direction.
4. The long-member vibration suppression system according to 3, wherein, one end portion is provided on one side in the one direction, at least one slit (35) is formed in the attenuation member (30), the at least one slit (35) extends in the one direction and is open at least at the one end portion of the attenuation member (30) while the attenuation member (30) is in the attached state,
   the contact portion (31) of the attenuation member (30) in the attached state is formed in a region where the at least one slit (35) is formed in the one direction, and
   the attenuation member (30) is inserted into the long member (22) while the contact portion (31) is compressed in size in the direction orthogonal to the one direction by the at least one slit (35).
5. The long-member vibration suppression system according to 4, wherein, the long member (22) is cylindrical in shape and hollow, and
   slits (35) are formed at regular intervals in a circumferential direction of the long member (22).
6. The long-member vibration suppression system according to 1, wherein, the elongated surface (22b) is an outer side surface of the long member (22),
   the attenuation member (130) is pipe-shaped, and the attenuation member (130) is fitted to the outer side surface of the long member (22) and attached to the long member (22).
7. The long-member vibration suppression system according to 6, wherein, one end portion of the attenuation member (130) is provided on one side in the one direction, at least one slit (35) is formed in the attenuation member (130), the at least one slit (35) extends in the one direction and is open at least at the one end portion of the attenuation member (130) on the one side in the one direction while the attenuation member (130) is in the attached state,
   the contact portion (131) of the attenuation member (130) in the attached state is formed in a region where the at least one slit (35) is formed in the one direction, and
   the attenuation member (130) is fitted to the outer side surface of the long member (22) while the size of the contact portion (131) in the direction orthogonal to the one direction is expanded by the at least one slit (35).
8. The long-member vibration suppression system according to 7, wherein, the outer side surface of the long member (22) is cylindrical in shape, and
   slits (35) are formed at regular intervals in a circumferential direction of the long member (22).
9. The long-member vibration suppression system according to any one of 1 to 8, wherein, the long member (22) includes: a first portion (23b, 23c); and a second portion (23a) which is positionally different from the first portion (23b, 23c) in the one direction and whose cross-sectional area in a direction orthogonal to the one direction is smaller than the cross-sectional area of the first portion (23b, 23c), and
   the attenuation member is located so that the second portion (23a) is positioned between the contact portion (31, 131) and the fixed portion (32, 132) in the one direction while the attenuation member is in the attached state.
10. The long-member vibration suppression system according to any one of 1 to 9, wherein, the contact portion (31, 131) is provided at the one end portion of the attenuation member (30, 130) on the one side in the one direction,
   the other end portion of the attenuation member (30, 130) is provided on the other side in the one direction, and the fixed portion (32, 132) is provided at the other end portion of the attenuation member (30, 130) on the other side in the one direction.
11. A long-member vibration suppression system comprising:
   a tube-shaped long member (22) which is long in one direction and which is bent due to vibration; and
   an attenuation member (30) which is pipe-shaped and which is used in an attached state of being attached to the long member (22) so as to extend in the one direction for suppressing vibration of the long member (22),
   the attenuation member (30) including:
      a fixed portion (32) which is positionally fixed to the long member (22) in the one direction while the attenuation member (30) is in the attached state; and
      a contact portion (31) which is positionally different from the fixed portion (32) in the one direction, which is configured to make contact with and press an elongated surface (22a), and which is movable relative to the elongated surface (22a) in the one direction while the attenuation member (30) is in the attached state, the elongated surface (22a) being an inner side surface of the long member (22) and extending along the one direction,
      at least one slit (35) being formed in the attenuation member (30), the at least one slit (35) extending in the one direction and being open at least at one end portion of the attenuation member (30) while the attenuation member (30) is in the attached state, the one end portion of the attenuation member (30) being provided on one side in the one direction,
      the contact portion (31) of the attenuation member (30) in the attached state being formed in a region where the at least one slit (35) is formed in the one direction, and
      the attenuation member (30) being inserted into the long member (22) while the contact portion (31) is compressed in size in an orthogonal direction orthogonal to the one direction by the at least one slit (35).
12. The long-member vibration suppression system according to 11, wherein, the long member (22) is cylindrical in shape and hollow, and
   slits (35) are formed at regular intervals in a circumferential direction of the long member (22).
13. A long-member vibration suppression system comprising:
   a long member (22) which is long in one direction and which is bent due to vibration; and
   an attenuation member (130) which is pipe-shaped and which is used in an attached state of being attached to the long member (22) so as to extend in the one direction for suppressing vibration of the long member (22),
   the attenuation member (130) including:
      a fixed portion (132) which is positionally fixed to the long member (22) in the one direction while the attenuation member (130) is in the attached state; and
      a contact portion (131) which is positionally different from the fixed portion (132) in the one direction, which is configured to make contact with and press an elongated surface (22b), and which is movable relative to the elongated surface (22b) in the one direction while the attenuation member (130) is in the attached state, the elongated surface (22b) being an outer side surface of the long member (22) and extending along the one direction,
      at least one slit (35) being formed in the attenuation member (130), the at least one slit (35) extending in the one direction and being open at least at one end portion of the attenuation member (130) while the attenuation member (130) is in the attached state, the one end portion of the attenuation member (130) being provided on one side in the one direction,
      the contact portion (131) of the attenuation member (130) in the attached state being formed in a region where the at least one slit (35) is formed in the one direction, and
      the attenuation member (130) being fitted to the outer side surface of the long member (22) while the size of the contact portion (131) in an orthogonal direction orthogonal to the one direction is expanded by the at least one slit (35).
14. The long-member vibration suppression system according to 13, wherein, the outer side surface of the long member (22) is cylindrical in shape, and
   slits (35) are formed at regular intervals in a circumferential direction of the long member (22).
15. The long-member vibration suppression system according to any one of 11 to 14, further comprising a noncontact portion (33, 133) which is positioned between the contact portion (31, 131) and the fixed portion (32, 132) and which does not make contact with the elongated surface (22a, 22b) of the long member (22) while the attenuation member is in the attached state.
16. The long-member vibration suppression system according to 15, wherein, the long member (22) includes: a first portion (23b, 23c); and a second portion (23a) which is positionally different from the first portion (23b, 23c) in the one direction and whose cross-sectional area in a direction orthogonal to the one direction is smaller than the cross-sectional area of the first portion (23b, 23c), and
   the attenuation member is located so that the second portion (23a) is positioned between the contact portion (31, 131) and the fixed portion (32, 132) in the one direction while the attenuation member is in the attached state.
17. The long-member vibration suppression system according to 15 or 16, wherein, the contact portion (31, 131) is provided at the one end portion of the attenuation member (30, 130) on the one side in the one direction,
   the other end portion of the attenuation member (30, 130) is provided on the other side in the one direction, and the fixed portion (32, 132) is provided at the other end portion of the attenuation member (30, 130) on the other side in the one direction.
18. A bobbin holder (9) cantilevered by a base (7), the bobbin holder (9) comprising:
   a rotational shaft (20) extending along one direction;
   a bobbin holding member (21) which is attached to the rotational shaft (20) so as to be rotatable together as the rotational shaft (20) and to which bobbins (B) aligned in the one direction are attachable; and
   a shaft supporting member (22) which is tube-shaped, which is long in the one direction, whose one of both end portions in the one direction is supported by the base, into which the rotational shaft (20) is inserted, and which rotatably supports the rotational shaft (20) via a bearing,
   the long-member vibration suppression system according to any one of 1 to 17 being applied to the bobbin holder (9), the bobbin holder (9) being used while an attenuation member (30, 130) is attached to the shaft supporting member (22) for suppressing vibration of the shaft supporting member (22).

## Claims

1. A long-member vibration suppression system comprising:
a long member (22) which is long in one direction and which is bent due to vibration; and
an attenuation member (130) which is pipe-shaped and which is used in an attached state of being attached to the long member (22) so as to extend in the one direction for suppressing vibration of the long member (22),
the attenuation member (130) including:
a fixed portion (132) which is positionally fixed to the long member (22) in the one direction while the attenuation member (130) is in the attached state; and
a contact portion (131) which is positionally different from the fixed portion (132) in the one direction, which is configured to make contact with and press an elongated surface (22b), and which is movable relative to the elongated surface (22b) in the one direction while the attenuation member (130) is in the attached state, the elongated surface (22b) being an outer side surface of the long member (22) and extending along the one direction,
at least one slit (35) being formed in the attenuation member (130), the at least one slit (35) extending in the one direction and being open at least at one end portion of the attenuation member (130) while the attenuation member (130) is in the attached state, the one end portion of the attenuation member (130) being provided on one side in the one direction,
the contact portion (131) of the attenuation member (130) in the attached state being formed in a region where the at least one slit (35) is formed in the one direction, and
the attenuation member (130) being fitted to the outer side surface of the long member (22) while the size of the contact portion (131) in an orthogonal direction orthogonal to the one direction is expanded by the at least one slit (35).

2. The long-member vibration suppression system according to claim 1, wherein, the outer side surface of the long member (22) is cylindrical in shape, and
slits (35) are formed at regular intervals in a circumferential direction of the long member (22).

3. The long-member vibration suppression system according to any one of claims 1 to 2, further comprising a noncontact portion (33, 133) which is positioned between the contact portion (31, 131) and the fixed portion (32, 132) and which does not make contact with the elongated surface (22a, 22b) of the long member (22) while the attenuation member is in the attached state.

4. The long-member vibration suppression system according to claim 3, wherein, the long member (22) includes: a first portion (23b, 23c); and a second portion (23a) which is positionally different from the first portion (23b, 23c) in the one direction and whose cross-sectional area in a direction orthogonal to the one direction is smaller than the cross-sectional area of the first portion (23b, 23c), and
the attenuation member is located so that the second portion (23a) is positioned between the contact portion (31, 131) and the fixed portion (32, 132) in the one direction while the attenuation member is in the attached state.

5. The long-member vibration suppression system according to claim 3 or 4, wherein, the contact portion (31, 131) is provided at the one end portion of the attenuation member (30, 130) on the one side in the one direction,
the other end portion of the attenuation member (30, 130) is provided on the other side in the one direction, and the fixed portion (32, 132) is provided at the other end portion of the attenuation member (30, 130) on the other side in the one direction.
